# EUROPEAN PATENT APPLICATION

(11) **EP 1 715 290 A1**
(43) Date of publication of application: **25.10.2006**
(21) Application number: 06110201.8
(22) Date of filing: 21.02.2006
(51) Int. Cl.: G01B 11/06, G02B 21/00

(54) **Confocal measurement method and apparatus in a paper machine**

(30) Priority: 18.04.2005 US 108337
(71) Applicant: Voith Patent GmbH, 89522 Heidenheim (DE)
(72) Inventor: Chase, Lee, Los Gatos, CA 95032 (US); Typpo, Pekka, Cupertino, CA 95014 (US)
(74) Representative: Kunze, Klaus

(57) **Abstract**

A method of determining a distance to an object, includes the steps of: focusing light from a light source onto the object using a lens; collecting light that is reflected and scattered from the object using the lens; focusing the collected light onto a plurality of light detectors; establishing an exact position of a focal point of the focused ligh t; and determining the distance to the object using the exact position of the focal point. In another form, an apparatus in a paper machine for determining a distance to a fiber web, includes: a light source; a lens for focusing light from the light source onto the fiber web, and collecting light that is reflected and scattered from the fiber web; at least one splitter for splitting the collected light into at least two beams; a plurality of targets, each target having a respective split beam focused ther eon, each target being at a different fixed location relative to a focal point of the focused split beams; and an electrical processing circuit for establishing an exact position of a focal point of the split light, and determining a distance to the obj ect using the exact position of the focal point.

## Description

### BACKGROUND OF THE INVENTION

### 1. Field of the invention.

The present invention relates to electronic measuring devices, and, more particularly, to electronic measuring devices used in paper mach ines for measuring a distance to a fiber web, surface roughness of the fiber web, and caliper of the fiber web..

### 2. Description of the related art.

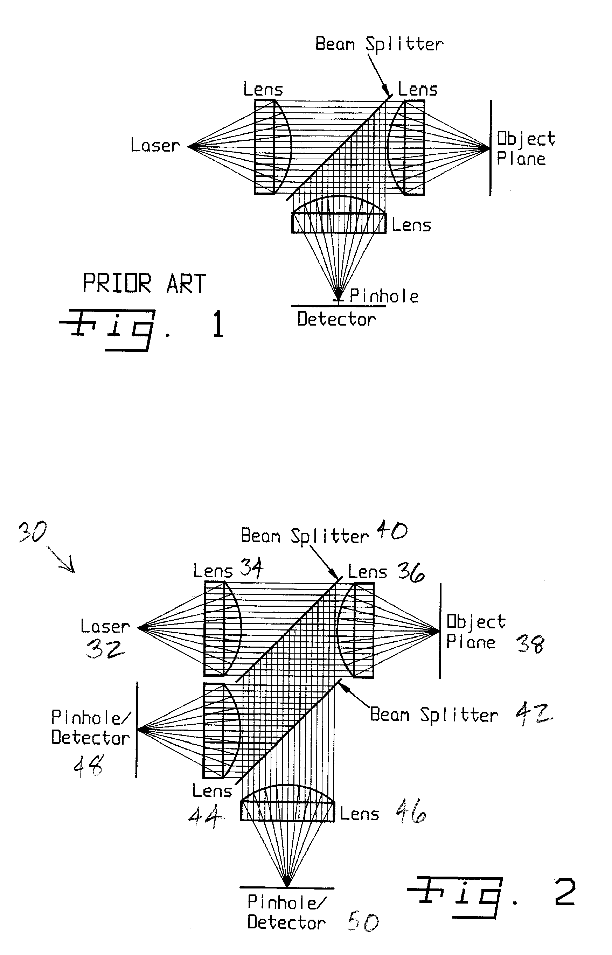

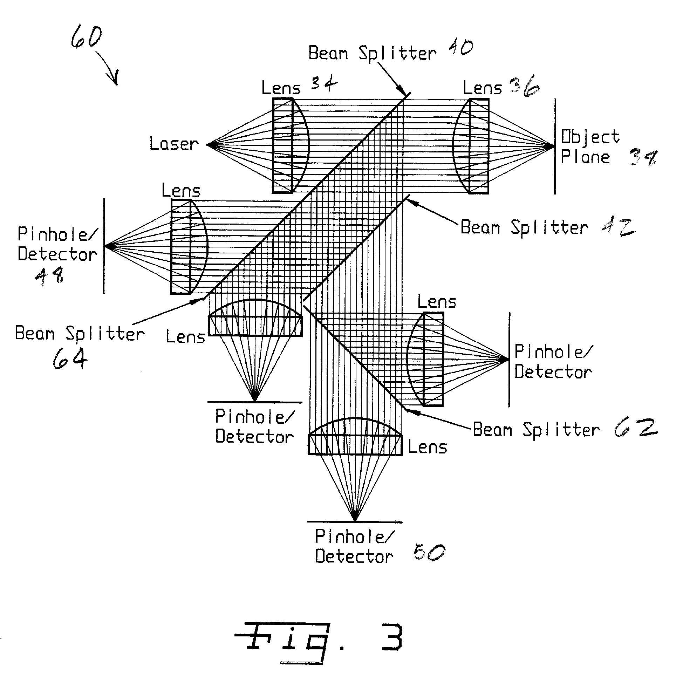

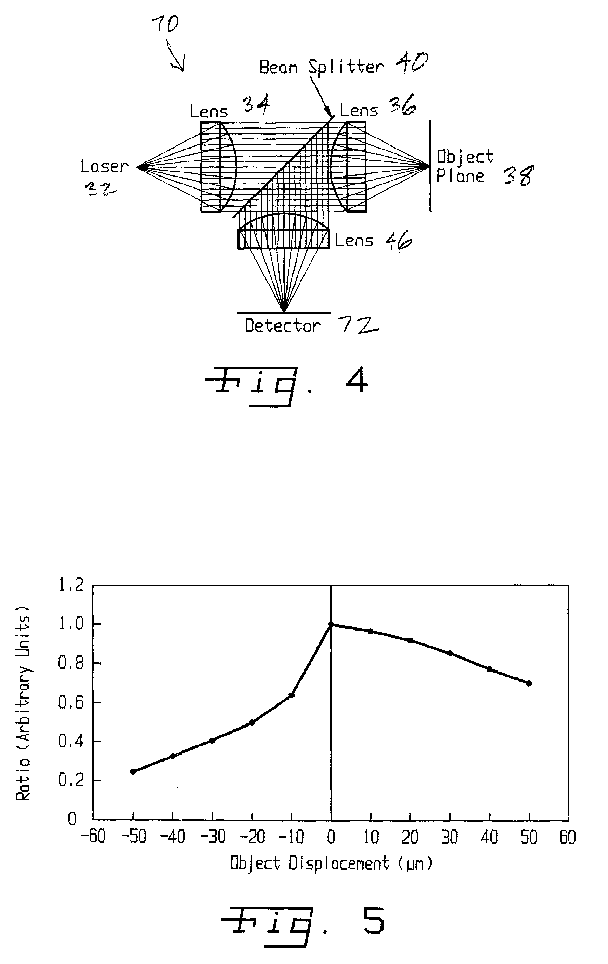

The confocal microscope fmds use in many applications because of its ability to focus on only one object plane. Referring to Fig. 1, light from a laser source 10 is passe d through a beam splitting mirror 12 and is focused through a lens 14 onto an object 16 (e.g., a paper web). Light scattered back from the object returns through the same lens 14, reflects of f the beam splitting mirror 18 at a right angle and is focused onto a pinhole 20. A light detector 22 behind pinhole 20 collects light that passes through it.

When the object is at exactly the focal point of the lens system, the image of the laser spot is tightly focused on the pinhole and the detector collects the maximum possible light. When the object moves away from the focal point, the image of the laser spot at the pinhole spreads out and less light passes through it to the detector.

By scanning the object, an image of the light returning from the focal plane can be obtained. The confocal microscope is used in biology to make an image of a plane inside a translucent specimen without having to dissect it. By scanning different planes a complete 3 dimensional image of the specimen can be developed.

For surface profiling the object distance is adjusted to obtain maximum signal from the detector as the microscope scans the object. The variations in the object distance are used to map out the surface contour of the object.

The surface roughness profile testing is useful in many industries. In the semiconductor industry the roughness of the wafer surface is a critical parameter. In metalworking, surface roughness is a routine specification. In the paper industry surface roughness relates directly to print quality. High quality printing grades go through coating and calendering steps to improve roughness and therefore print quality.

Measurement of surface roughness of paper while it is being manufactured would be useful for control purposes. For instance, calender pressure could be adjusted to obtain the smoothness required without waiting for lab results, thus eliminating the waste off -spec paper. On-line measurement of roughness is difficult though because paper typically travels at 1200 meters/minute while it's being manufactured and the scale size of the surface roughness is down to about 40 microns. The measurement requires about a 1MHz frequency response.

Caliper can also be measured by using two confocal microscopes, one on each side of the sheet. If the confocal microscopes are a known distance apart, then the distance to the surface measured by each microscope is subtracted to obtain the caliper. The advantage over conventional caliper measurements is that there is no contact with the sheet, eliminating damage.

The confocal microscope has been used for lab measurement of paper roughness. The technique has the advantage that the point of sharpest focus is always at the surface. Any light penetrating the surface is scattered and does not reach the detector of the confocal microscope.

Adapting the confocal microscope for on -line paper roughness measurement has not been done because of the high -speed response required. Response speed is limited because some part of the microscope must move to fmd the point of sharpest focus. The whole microscope, the objective lens or the pinhole must move. The fastest confocal microscopes vibrate a lightweight pinhole back and forth and measure the point of maximum sig nal (e.g., vibration of pinhole 20 in Fig. 1). These achieve about a 1.4kHz frequency response, which is not a sufficient response time for online paper machines with a web moving at speeds up to 7000 feet/minute.

Laser triangulation has been used for high -speed on-line measurement of paper roughness and caliper. The laser triangulation technique has had limited success because the projected laser spot penetrates the surface of the paper and the measured centroid of the diffuse image of the laser spot is not exactly at the surface.

What is needed in the art is a method and apparatus that allows use of the confocal measurement principal on a high speed paper machine for surface roughness and caliper.

### SUMMARY OF THE INVENTION

The present invention provide s an optical measurement of the distance to the paper surface with an accuracy that is better than 0.25 micrometers. Traditional laser triangulation can only achieve this accuracy if the light doesn't penetrate into the sheet, and with paper the penetration depth is in most cases tens of micrometers.

The present invention also provides an optical distance sensor that is fast enough to measure small scale surface topography of the sheet in a high speed paper machine for surface roughness measurement. This requires a response speed in the megaherz range.

The invention comprises, in one form thereof, a method of determining a distance to an object, comprising the steps of: focusing light from a light source onto the object using a lens; collecting light that i s reflected and scattered from the object using the lens; focusing the collected light onto a plurality of light detectors; establishing an exact position of a focal point of the focused light; and determining the distance to the object using the exact po sition of the focal point.

The invention comprises, in another form thereof, a method of determining a distance to an object, comprising the steps of: focusing light from a light source onto the object using a lens; collecting light that is reflected and scattered from the object using the lens; focusing the collected light toward at least one target; establishing an exact position of a focal point of the focused light; and determining the distance to the object using the exact position of the focal point.

The invention comprises, in yet another form thereof, an apparatus in a paper machine for determining a distance to a fiber web, including: a light source; a lens for focusing light from the light source onto the fiber web, and collecting light that is reflected and scattered from the fiber web; at least one splitter for splitting the collected light into at least two beams; a plurality of targets, each target having a respective split beam focused thereon, each target being at a different fixed location relative to a focal point of the focused split beams; and an electrical processing circuit for establishing an exact position of a focal point of the split light, and determining a distance to the object using the exact position of the focal point.

An advantage of the present invention is that the use of the confocal principle without moving parts combined with the analysis of the high frequency components of the signals from the photodetectors allows the measurement of the light that is reflected from th e paper surface and the exclusion of most of the light that is reflected from inside the paper sheet. In this manner, the distance to the surface can be measured accurately with high speed , facilitating the use of this device for both paper thickness and roughness sensors.

### BRIEF DESCRIPTION OF THE DRAWINGS

The above-mentioned and other features and advantages of this invention, and the manner of attaining them, will become more apparent and the invention will be better understood by reference to the fol lowing description of embodiments of the invention taken in conjunction with the accompanying drawings, wherein:
Fig. 1 is a schematic illustration of a known confocal measurement configuration using a single detector;
Fig. 2 is a schematic illustration of an embodiment of a confocal measurement configuration of the present invention using a beam splitter and multiple pinhole/detector combinations;
Fig. 3 is a schematic illustration of another embodiment of the confocal measurement configuration of the p resent invention using a beam splitter and multiple pinhole/detector combinations;
Fig. 4 is a schematic illustration of yet another embodiment of the confocal measurement configuration of the present invention using a beam splitter and an array of light detectors; and
Fig. 5 is a graphical illustration of the ratio of the center element signal and the sum of all detector element signals using an array detector.

Corresponding reference characters indicate corresponding parts throughout the several views. The exemplifications set out herein illustrate one preferred embodiment of the invention, in one form, and such exemplifications are not to be construed as limiting the scope of the invention in any manner.

### DETAILED DESCRIPTION OF THE INVENTION

Referring now to the drawings, and more particularly to Fig. 2, there is shown a schematic illustration of an embodiment of a confocal measurement configuration 30 of the present invention. Rather than moving the whole microscope, an objective lens or a pinhole a s has been done with past configurations, the present invention uses additional beam splitters and additional detectors at different fixed locations. Analysis of the output signals from the muliple detectors then allows a determination of the distance to the object.

Confocal measurement apparatus 30 includes a light source 32, a condenser lens 34, a focusing lens 36 adjacent object 38, a pair of beam splitters 40 and 42, and a pair of focusing lenses 44 and 46 adjacent detectors 48 and 50.

In the embodiment shown in Fig. 2, light source 32 is in the form of a laser diode because of its small size and high intensity. However, other light sources can equally be used, such as an incandescent bulb with a pinhole aperture.

Condenser lens 34 collects the laser light and makes a parallel beam. Beam splitter 40 is a 45-degree angle beam splitter placed in the parallel beam. Half the laser light continues straight through objective lens 36 and is focused onto the object surface at normal incidence. Other angles can be chosen as well. The reflected half of the laser beam is collected in a light trap and is not utilized.

Light reflected and scattered from the surface of object 38 is collected by objective lens 36 and collimated toward beam splitter 40. The beam spl itter 40 directs half of the returned light at a right angle to the laser beam. The returned light is split again into at least two more beams using beam splitter 42. Each time the beam is split the intensity of each beam is reduced by a factor of 2. To get two beams the light encounters the two beam splitters 40 and 42 resulting in ¼ the intensity. To obtain 4 beams, another pair of beam splitters 62 and 64 are required in each beam resulting in 1/8 the intensity (see, e.g., confocal measurement apparatus 60 in Fig. 3). Two beams are sufficient, but more can be used if sufficient light is available.

After the returned light is split into the number of beams required, each is focused toward a detector in the form of pinholes 48 and 50. The pinholes 48 and 50 are not placed exactly at the focus, but are displaced by different distances from the focal plane. The exact displacement depends on the range and accuracy desired. When the distance to the illuminated object changes, the focal point of the returned li ght moves. More light passes through the pinhole 48 or 50 which is closer to the focal point while less passes through the other. The relative intensity of the light passing through pinholes 48 and 50 to the associated light detectors (not shown) is used t o determine the distance to the illuminated object.

Broadly speaking, detectors 48 and 50 can be viewed as "targets" upon which the split and focused light beam is focused. The term "target", as used herein, is intended to mean a pinhole, a light detector, an array of light detectors, and/or a bundle of fiber optic fibers. When configured as a pinhole, it will be appreciated that a light detector of some sort is positioned behind the pinhole; but the light is actually focused on the pinhole at a fixed di stance. Therefore, the target can be viewed as the pinhole or the pinhole/light detector combination.

The intensity of light passing through pinholes 48 and 50 also depends on the size and shape of the pinholes. Typically the pinhole is round, between 50 and 100 micrometers in diameter. Other shapes and sizes can be used as well, including elliptical, rectangular or a slit. The size and shape of the pinhole affects the rate at which the light intensity changes as the focal point of the returned light move s. Further, the pinholes do not have to be identical. For instance , one pinhole could be very small making it very sensitive to the focal point while the other could be very large to provide a reference light intensity, insensitive to the focal point. The pinhole shapes and sizes can be optimized to obtain the best accuracy over the desired measurement range.

The accuracy of the measurement can be improved if the distance being measured can be made short and the range of variation of that distance is small . While close proximity to the object being measured is desirable, touching it often is not. For example, when measuring fine paper moving at high speed, the sheet can be seriously damaged if contacted. To maintain close proximity to a plane surface such a s paper and not contact it, confocal measurement apparatus 30 or 60 may be mounted on an air bearing. An air bearing is created with a disc, placed flat on the surface, with tiny orifices through which air is injected. The escaping air lifts the disc off the surface to a height that depends on the airflow, typically averaging around 100 micrometers. When confocal measurement apparatus 30 on the air bearing is scanned across the surface, local variations in the surface contours can be accurately measured as deviations from average air bearing height. Further, the average air bearing height can be stabilized by using the average measured distance to control airflow.

The signal from each light detector behind pinholes 48 and 50 is analyzed by a digital signal processor or similar electronics in the manner described above.

While the embodiments shown in Figs. 2 and 3 show optics with several lenses for collimating and focusing light, it is possible to achieve the same results with only a single lens. The single lens configuration is not be as efficient for collecting light. Conversely more lenses can be used with no change in the principles of the invention.

The embodiments illustrated in Figs. 2 and 3 show the laser illumination beam going straight through the first beam splitter and the detector system viewing the reflected light after it is reflected to a 90° angle. This geometry can be reversed so that the laser beam is reflected in a 90° angle at the first beam splitter and the light reflected from the obje ct goes straight through the first beam splitter. The first beam splitter separates the laser beam from the light that has been reflected back from the object under measurement.

Referring now to Fig. 4, another embodiment of a confocal measurement apparat us 70 includes a target in the form of an array detector 72. Th e light reflected from object 38 is focused onto array detector 72 instead of using multiple pinholes and beam splitters. Array detector 72 is preferably a 2 -dimensional array of light detect ors, but a linear array can also be used. The image that is detected by the array detector will depend strongly on the object position. If the array detector is placed at the nominal focal plane, the intensity at the centerline is high and drops off very rapidly towards the edges of the detector.

The simplest method for calculating the distance from the measured intensities uses the center pixel in array detector 72 as the equivalent to the pinhole and uses the ratio of the center pixel signal and the sum of all pixel signals (see Fig. 5). This ratio is a non -linear function of the distance, so a suitable mathematical linearization algorithm is used.

When the object distance is changed, the intensity detected at the center drops rapidly and spreads over a wide area on the detector surface. How this spreading happens depends on the lenses used for this device. The preferred method uses aspheric lenses that form a very small focal spot when the beam on the planar side of the lens is parallel with the lens axis. In that case the ratio of the center element signal and the sum of all detector element signals is as shown in Fig. 5.

As can be seen, it is advantageous to place the detector so that the measurement range is always on the high slope side of the peak intensity. With the aspheric lenses optimized to produce a minimum focal spot with a collimated incoming beam the intensity is approximately Gaussian on one side of the focal plane and ring shaped with a dip in the middle on the other side of the focal plane. This is the reason for the asymmetrical curve shape in Fig. 5.

A more sophisticated algorithm uses an image analysis algorithm to identify the exact centerline of the beam on the detector array to get a more accurate value for the centerline intensity.

It is also possible to place an end of a fiber optic cable instead of a detector array into the focal plane. In one embodiment of a configuration using a fiber optic cable, the geometry is the same as shown in Fig. 4, except that array detector 72 is replaced with a target in the form of an end of a fiber optic cable. The fiber with its end at the centerline directs light to a photo detector and the rest of the fibers are bundled together and the light from them is guided to a second detector. The center fiber would then be equivalent to the center pixel in the previous method using the array detector, and the signal from the other fibers would represent the pixel sum signal.

Additionally, an array detector or a fiber optic cable as described above can be used to replace the fixed pinhole/detector combination in the system using beam splitters to divide the received beam into two or more beams. In that case the array detector or fiber optic cable end is located at different distances from the focal plan e in the same way as the pinholes are used in the preferred embodiment.

While this invention has been described as having a preferred design, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A method of determining a distance to an object, comprising the steps of:
focusing light from a light source onto the object using a 1 ens;
collecting light that is reflected and scattered from the object using said lens;
focusing the collected light onto a plurality of light detectors; and
determining a distance to the object using output signals from a plurality of said light detectors.

2. The method of determining a distance to an object of claim 1, including the steps of:
splitting the collected light into at least two beams;
focusing each split beam toward a respective target, each said target being at a different fixed location relative to a focal point of said focused split beam; and
positioning at least one said light detector in association with each said target.

3. The method of determining a distance to an object of any one of the preceding claims , wherein each said target comprises a pinhole, and including the step of positioning one of said light detectors behind each said pinhole, and said output signal from each said light detector indicates an amount of light that passes through said corresponding pinhole.

4. The method of determining a distance to an object of of any one of the preceding claims, wherein each said target comprises one of a pinhole, a light detector, an array of light detectors ,and a bundle of fiber optic fibers.

5. The method of determining a distance to an object of any one of the preceding claims , wherein said determining step includes the steps of:
establishing an exact position of a focal point of at least one said focused split beam; and
determining the distance to the object using sai d at least one said determined exact position of the focal point.

6. The method of determining a distance to an object of any one of the preceding claims , wherein said determining step includes the step of:
using a high frequency component of said output signals to measure an amount of light with high frequency variations reflected and scattered from the object.

7. The method of determining a distance to an object of any one of the preceding claims , wherein said determining step includes the step of:
analyzing said high frequency component of said output signals to establish an exact position of focus of said high frequency component of said output signals; and
determining said distance to the object from said exact position of focus of said high frequency component of said output signals.

8. The method of determining a distance to an object of any one of the preceding claims , wherein said step of splitting the collected light into at least two beams comprises splitting the collected light into two be ams.

9. The method of determining a distance to an object of any one of the preceding claims , wherein said step of splitting the collected light into at least two beams comprises splitting the collected light into four beams.

10. The method of determining a distance to an object of any one of the preceding claims, wherein said light source comprises a laser diode.

11. The method of determining a distance to an object of any one of the preceding claims, wherein said array of light detectors comprises a two dimensional array of light detectors.

12. The method of determining a distance to an object of any one of the preceding claims, wherein said array of light detectors comprises a linear array of light detectors.

13. The method of determining a di stance to an object of any one of the preceding claims, including the steps of:
moving the object relative to the light source;
generating a plurality of output signals from each of said plurality of light detectors; and
determining a surface profile of the object using said plurality of output signals.

14. The method of determining a distance to an object of any one of the preceding claims, wherein the object comprises a fiber web, and including the step of measuring a caliper of the fiber web.

15. The method of determining a distance to an object of any one of the preceding claims, wherein said step of measuring said caliper of the fiber web comprises the steps of:
carrying out said steps of focusing said light, collecting said light, focusing the co llected light, and calculating the distance on opposite sides of the fiber web; and
subtracting a sum of the measured distances from a known separation distance between said light source on opposite sides of the fiber web.

16. The method of determining a distance to an object of any one of the preceding claims, including the step of moving the object relative to the light source.

17. A method of determining a distance to an object, comprising the steps of:
focusing light from a light source onto the ob ject using a lens;
collecting light that is reflected and scattered from the object using said lens;
focusing the collected light onto a plurality of light detectors;
establishing an exact position of a focal point of said focused light; and
determining the distance to the object using said exact position of the focal point.

18. The method of determining a distance to an object of claim 17, wherein said calculating step includes the step of using a high frequency component of said output signals to measure an amount of light with high frequency variations reflected and scattered from the object and focused toward said plurality of light detectors.

19. The method of determining a distance to an object of any one of the preceding claims, wherein said calculating step includes the step of:
analyzing said high frequency component of said output signals to find an exact position of focus of said high frequency component of said output signals; and
determining said distance to the object from said exact position of focus of said high frequency component of said output signals.

20. The method of determining a distance to an object of any one of the preceding claims, including the steps of:
moving the object relative to the light source;
generating a plurality of output signals from each of said plurality of light detectors; and
determining a surface profile of the object using said plurality of output signals.

21. The method of determining a distance to an object of any one of the preceding claims, wherein the object comprises a fiber web, and including the step of measuring a caliper of the fiber web.

22. The method of determining a distance to an object of any one of the preceding claims, wherein said step of measuring said caliper of the fiber web comprises the steps of:
carrying out said steps of focusing said light, collecting said light, focusing the collected light, and calculating the distance on opposite sides of the fiber web; and
subtracting a sum of the measured distances from a known separation distance between said light source on opposite sides of the fiber web.

23. The method of determining a distance to an object of any one of the preceding claims, including the step of moving the object relative to the light source.

24. A method of determining a distance to an object, comprising the steps of:
focusing light from a light source onto the object using a lens;
collecting light that is reflected and scattered from the object using said lens;
focusing the collected light toward at lea st one target;
establishing an exact position of a focal point of said focused light; and
determining the distance to the object using said exact position of said focal point.

25. The method of determining a distance to an object of claim 24, wherein each said target comprises one of a pinhole, a light detector, an array of light detectors, and a bundle of fiber optic fibers.

26. The method of determining a distance to an object of of any one of the preceding claims, wherein each said pinhole has a lig ht detector positioned in association therewith.

27. The method of determining a distance to an object of any one of the preceding claims, wherein said determining step includes the substep of using a high frequency component of output signals from at le ast one of said light detectors, said array of light detectors, and said bundle of fiber optic fibers to measure an amount of light with high frequency variations reflected and scattered from the object and focused toward said at least one target.

28. The method of determining a distance to an object of claim 26, wherein said determining step includes the steps of:
analyzing said high frequency component of said output signals to establish an exact position of focus of said high frequency component of sai d output signals; and
determining said distance to the object from said exact position of focus of said high frequency component of said output signals.

29. The method of determining a distance to an object of claim 28, including the steps of:
moving the object relative to the light source;
generating a plurality of output signals from each of said plurality of light detectors; and
determining a surface profile of the object using said plurality of output signals.

30. The method of determining a dist ance to an object of claim 29, wherein the object comprises a fiber web, and including the step of measuring a caliper of the fiber web.

31. The method of determining a distance to an object of claim 30, wherein said step of measuring said caliper of the fiber web comprises the steps of:
carrying out said steps of focusing said light, collecting said light, focusing the collected light, and calculating the distance on opposite sides of the fiber web; and
subtracting a sum of the measured distances from a known separation distance between said light source on opposite sides of the fiber web.

32. The method of determining a distance to an object of claim 31, including the step of moving the object relative to the light source.

33. The method of determining a distance to an object of claim 24, wherein said at least one target comprises a plurality of targets, and including the steps of:
splitting the collected light beam into at least two beams;
focusing each split beam toward a respective said target, e ach said target being at a different fixed location relative to a focal point of said focused split beam; and
positioning at least one said light detector in association with each said target.

34. The method of determining a distance to an object of cl aim 33, wherein each said target comprises one of a pinhole, a light detector, an array of light detectors, and a bundle of fiber optic fibers.

35. The method of determining a distance to an object of claim 34, wherein said determining step includes the step of using a high frequency component of said output signals to measure an amount of light with high frequency variations reflected and scattered from the object and focused toward said array of light detectors.

36. The method of determining a distance to an object of claim 35, wherein said determining step includes the step of:
analyzing said high frequency component of said output signals to find an exact position of focus of said high frequency component of said output signals; and
determining said distance to the object from said exact position of focus of said high frequency component of said output signals.

37. The method of determining a distance to an object of claim 36, including the steps of:
moving the object relative to the light source;
generating a plurality of output signals from each of said plurality of light detectors; and
determining a surface profile of the object using said plurality of output signals.

38. The method of determining a distance to an object of claim 37, wherein the object comprises a fiber web, and including the step of measuring a caliper of the fiber web.

39. The method of determining a distance to an object of claim 38, wherein said step of measuring said caliper of the fiber web comprises the steps of:
carrying out said steps of focusing said light, collecting said light, focusing the collected light, and calculating the distance on opposite sides of the fiber web; and
subtracting a sum of the measured distances from a known separation distance between said light source on opposite sides of the fiber web.

40. The method of determining a distance to an object of claim 39, including the step of moving the object relative to the light source.

41. In a paper machine, an apparatus for determining a distance to a fiber web, comprising:
a light source;
a lens for focusing light from said light source onto the fiber web, and collecting light that is reflected and scattered from the fiber web;
at least one splitter for splitting the collected light into at least t wo beams;
a plurality of targets, each said target having a respective said split beam focused thereon, each said target being at a different fixed location relative to a focal point of said focused split beams; and
an electrical processing circuit for es tablishing an exact position of a focal point of said split light, and determining a distance to the object using said exact position of said focal point.

42. The apparatus for determining a distance to a fiber web of claim 41, wherein each said target comprises one of a pinhole, a light detector, an array of light detectors, and a bundle of fiber optic fibers.

43. The apparatus for determining a distance to a fiber web of claim 41, wherein each said target comprises a two dimensional array of light de tectors.

44. The apparatus for determining a distance to a fiber web of claim 41, wherein each said target comprises a linear array of light detectors.

45. The apparatus for determining a distance to a fiber web of claim 41, wherein said light source comprises a laser diode.

46. A method of determining a distance to an object, comprising the steps of:
focusing light from a light source onto the object using a lens;
collecting light that is reflected and scattered from the object using said lens;
splitting the collected light into at least two beams;
focusing each said split beam toward a respective pinhole, each said pinhole being at a different fixed location relative to a focal point of said focused split beams;
positioning at least one light detector behind each said pinhole;
establishing an exact position of a focal point of said focused split beams using output signals from each said light detector; and
determining the distance to the object using said exact position of said focal point.

47. A method of determining a distance to an object, comprising the steps of:
focusing light from a light source onto the object using a lens;
collecting light that is reflected and scattered from the object using said lens;
focusing the collected light to ward an array of light detectors;
establishing an exact position of a focal point of said focused light using output signals from said array of light detectors; and
determining the distance to the object using said exact position of said focal point.

48. A method of determining a distance to an object, comprising the steps of:
focusing light from a light source onto the object using a lens;
collecting light that is reflected and scattered from the object using said lens;
splitting the collected light into at least two beams;
focusing each said split beam toward a respective array of light detectors, each said array of light detectors being at a different fixed location relative to a focal point of said focused split beams;
establishing an exact position of a focal point of said focused split beams using output signals from each said array of light detectors; and
determining the distance to the object using said exact position of said focal point.

49. A method of determining a distance to an object, com prising the steps of:
focusing light from a light source onto the object using a lens;
collecting light that is reflected and scattered from the object using said lens;
focusing the collected light toward a bundle of fibers ends in a fiber optic cable;
guiding light focused on a center area of said fiber ends to one light detector and guiding light focused on other areas of said fiber ends to a plurality of other light detectors;
establishing an exact position of a focal point of said focused light usi ng output signals from said light detectors; and
determining the distance to the object using said exact position of said focal point.

50. A method of determining a distance to an object, comprising the steps of:
focusing light from a light source onto the object using a lens;
collecting light that is reflected and scattered from the object using said lens;
splitting the collected light into at least two beams;
focusing each said split beam toward a respective fiber optic cable end, each said fiber optic cable end having a bundle of fibers ends, each said fiber optic cable end being at a different fixed location relative to a focal point of said focused split beams;
guiding light focused on a center area of said fiber ends of each said fiber optic cable end to one light detector and guiding light focused on other areas of said fiber ends of each said fiber optic cable end to a plurality of other light detectors;
establishing an exact position of a focal point of said focused split beams using output signals from each of said light detectors; and
determining the distance to the object using said exact position of said focal point.
